# EUROPÄISCHE PATENTSCHRIFT

(11) **EP 1 792 247 B1**
(45) Veröffentlichungstag und Bekanntmachung des Hinweises auf die Patenterteilung: **07.07.2010**
(21) Anmeldenummer: 05779204.6
(22) Anmeldetag: 25.07.2005
(51) Int. Cl.: G06F 1/00, G06Q 10/00, H04L 12/24

(54) **VERFAHREN ZUM BETREIBEN EINES DATENÜBERTRAGUNGSNETZES UNTER VERWENDUNG VON LIZENZDATEN UND ZUGEHÖRIGER VORRICHTUNGSVERBUND**
METHOD FOR OPERATING A DATA TRANSMISSION NETWORK USING LICENCE DATA AND ASSOCIATED DEVICE NETWORK
PROCEDE POUR FAIRE FONCTIONNER UN RESEAU DE TRANSMISSION DE DONNEES AU MOYEN DE DONNEES DE LICENCE ET RESEAU DE DISPOSITIFS ASSOCIE

(30) Priorität: 17.09.2004 DE 102004045192
(43) Veröffentlichungstag der Anmeldung: 06.06.2007
(73) Patentinhaber: Nokia Siemens Networks GmbH & Co. KG, 81541 München (DE)
(72) Erfinder: SCHUSCHAN, Martin, 18510 Schönenwalde (DE)
(86) Internationale Anmeldenummer: PCT/EP2005/053594
(87) Internationale Veröffentlichungsnummer: WO 2006/029932

(56) Entgegenhaltungen:
- US-A- 5 940 504
- US-A1- 2003 018 899
- US-B1- 6 502 079

## Beschreibung

Die Erfindung betrifft ein Verfahren, bei dem die folgenden Schritte ausgeführt werden:
- Erzeugen von Lizenzdaten, die Nutzungsbedingungen für die Nutzung mindestens einer Funktion in einem Datenübertragungsnetz festlegen,
- abhängig von den Lizenzdaten Nutzen der Funktion auf mindestens einem Dienstnutzungsrechner des Datenübertragungsnetzes, und
- Überwachen der Einhaltung der Nutzungsbedingungen durch einen Diensterbringungsrechner.

Die Lizenz ist die Einräumung eines Nutzungsrechts für eine Funktion. Die Lizenzdaten werden üblicherweise vom Lizenzgeber unter Berücksichtigung des Umfangs der gewährten Lizenz bzw. der gewährten Lizenzen erzeugt. Die lizenzierungspflichtige Funktion betrifft beispielsweise die Nutzung eines Programms oder die Nutzung einer Schaltungseinheit. Ein Beispiel für eine Schaltungseinheit ist das Netzelement vom Typ hiX5300, das von der Firma Siemens AG hergestellt wird. Ein Beispiel für ein Programm ist das Programm SAP.

Bei der Lizenzierung unterscheidet man einerseits die Lizenzierung für einen bestimmten Rechner und andererseits eine Lizenzierung für eine bestimmte Anzahl gleichzeitiger Aufrufe der Funktion unabhängig vom verwendeten Rechner. Die rechnerbezogene Lizenzierung wird auch als "nodelocked license" bezeichnet. Dagegen wird die rechnerunabhängige Lizenzierung auch als "floating license" bezeichnet. Das erfindungsgemäße Verfahren ist insbesondere für die rechnerunabhängige Lizenzierung von Funktionen geeignet.

Bei einer Störung der Überwachung könnte man die Nutzung der Funktion auf dem Dienstnutzungsrechner bzw. auf den Dienstnutzungsrechnern unterbinden. Dies wäre eine einfache Möglichkeit, um einem Missbrauch vorzubeugen.

Ein anderes Beispiel zum Umgang mit Störungen bei der Lizenz-Überwachung liefert das US-Patent US5940504. Gemäß dem darin erläuterten Verfahren werden Lizenzen zyklisch erneuert. Sollte eine derartige Erneuerung aufgrund einer Störung jedoch nicht durchgeführt werden können, kann mittels einer einfachen Verlängerung der bisherigen Lizenz das Funktionieren der betreffenden Funktion weiterhin gesichert werden.

Ein ähnliches Verfahren wird in dem US-Patent US6502079 offenbart. Dabei wird einem Lizenznehmer abhängig von den bis dato genommenen Lizenzen eine zusätzliche Lizenzdauer zugestanden, die im Falle des Ausfalls der Überwachung zur aktuellen Lizenz addiert werden kann.

Es ist Aufgabe der Erfindung, ein einfaches Verfahren zum Betreiben eines Datenübertragungsnetzes unter Verwendung von Lizenzdaten anzugeben, das insbesondere einem Missbrauch vorbeugt und das insbesondere dennoch eine möglichst störungsfreie Nutzung der Funktion durch einen Nutzer gewährleistet. Außerdem soll ein zugehöriger Vorrichtungsverbund angegeben werden.

Die auf das Verfahren bezogene Aufgabe wird durch ein verfahren mit den im Patentanspruch 1 angegebenen Verfahrensschritten gelöst. Weiterbildungen sind in den Unteransprüchen angegeben.

Die Erfindung geht von der Überlegung aus, dass ein Floating-License-System, das aus einem Floating-Server bzw. einem Floating-Diensterbringungsrechner und mehreren License-Clients bzw. License-Dienstnutzungsrechnern besteht, den Nachteil hat, dass es sehr störanfällig ist, wenn bei einer Störung der Überwachung auch die Nutzung der Funktion unterbunden wird. Insbesondere für Kommunikationsnetze, die eine hohe Zuverlässigkeit aufweisen müssen, ist aber ein Floating-License-System erforderlich, das im Fall einer Störung eine definierte dynamische Lizenzrückgabe unterstützt, um Systemausfälle auszuschließen. Deshalb wird bei der Erfindung eine dynamische Lizenz-Rückgabe-Steuerung eingesetzt, die zu einem sicheren und störunanfälligen Floating-License-System führt. Die Steuerung berechnet eine Lizenz-Rückgabezeit bzw. eine Zusatznutzungsdauer. Sofern Störungen auftreten, erfolgt die Rückgabe der Lizenzen auf einem Netzelement bzw. dem Dienstnutzungsrechner nach Ablauf der Lizenz-Rückgabe-Zeit bzw. der Zusatznutzungsdauer. Damit werden die Lizenzen für die Funktionen nicht sofort gesperrt, sondern erst nach der Zusatznutzungsdauer. Wenn keine Störungen auftreten, erhöht sich die Lizenz-Rückgabe-Zeit bei einer Ausgestaltung.

Zusätzlich zu den eingangs genannten Verfahrensschritten werden bei dem erfindungsgemäßen Verfahren ohne Beschränkung durch die Reihenfolge, in der die Verfahrensschritte aufgelistet sind, noch die folgenden Verfahrensschritte ausgeführt:
- Festlegen einer Zusatznutzungsdauer unter Berücksichtigung von Störungen bei der Überwachung, und
- im Fall einer Störung der Überwachung Nutzen der Funktion abhängig von der Zusatznutzungsdauer.

Bei einer Weiterbildung legen die Lizenzdaten eine Anzahl der gleichzeitigen Nutzungen mindestens einer Funktion bzw. Zugriffe auf diese Funktion in dem Datenübertragungsnetz fest. Damit wird ein Floating-License-System unterstützt.

Bei einer anderen Weiterbildung des erfindungsgemäßen Verfahrens betrifft die lizenzierungspflichtige Funktion den Aufruf und die Nutzung eines Programms oder eines Programmteils. Alternativ betrifft die Funktion die Nutzung einer Schaltungseinheit oder einer Teilfunktion einer Schaltungseinheit, insbesondere in Verbindung mit der Nutzung eines Programms oder eines Programmteils. Die Funktion wird auch als Leistungsmerkmal bezeichnet. Das Lizenzieren von Leistungsmerkmalen mit Hilfe von Lizenzdaten ist insbesondere eine bevorzugte Lösung für das Verteilen und Aktualisieren von Programmen über das Internet.

Bei dem erfindungsgemäßen Verfahren werden die folgenden Schritte ausgeführt:
- Festlegen mindestens eines Prüfzeitfensters, einer zu dem Prüfzeitfenster gehörenden Zusatznutzungsdauer und eines zu dem Prüfzeitfenster gehörenden Prüfkriteriums, das ein Maß für zugelassene Störungen der Überwachung ist,
- Ermitteln der Störungen, die in dem Prüfzeitfenster aufgetreten sind,
- Prüfen des Prüfkriteriums an Hand der ermittelten Störungen und
- Festlegen der Zusatznutzungsdauer abhängig vom Ergebnis der Prüfung des Prüfkriteriums.

Durch das Festlegen eines Prüfzeitfensters wird eine sehr starke Nichtlinearität bei der Vergabe von Zusatznutzungsdauern erreicht. Einem Ansammeln einer immer größer werdenden Bonuszeit über eine zunehmende Nutzungsdauer wird durch die Verwendung des Prüfzeitfensters entgegengewirkt. Damit wird ein Missbrauch der Zusatznutzungsdauer erschwert. Außerdem ist es aufgrund der Prüfzeitfenster möglich, die Zusatznutzungsdauern auf empirische Art so festzulegen, dass die Gegebenheiten in einem Datenübertragungsnetz berücksichtigt werden, insbesondere hinsichtlich der Störanfälligkeit.

Bei einer ersten Weiterbildung ist das Zeitfenster ein sogenanntes gleitendes Zeitfenster, dessen Endzeitpunkt sich mit der aktuellen Zeit verschiebt, während die Länge des Zeitfenster konstant ist.

Bei einer nächsten Weiterbildung werden die folgenden besonders geeigneten Festlegungen getroffen:
- Länge des Zeitfensters ein Tag, Zusatznutzungsdauer zwei Stunden,
- Länge des Zeitfensters eine Woche, Zusatznutzungsdauer ein Tag, und
- Länge des Zeitfensters zwei Wochen, zugehörige Nutzungsdauer zwei Tage.

Bei einer anderen Weiterbildung wird die Überwachung wiederholt automatisch gestartet. Bei der Verwendung eines konstanten Überwachungsintervalls lassen sich bspw. Timer- oder Zählerschaltkreise auf einfache Art und Weise nutzen. Das Überwachungsintervall liegt beispielsweise im Bereich von fünf Minuten bis zu einer Stunde.

Bei einer anderen Weiterbildung des erfindungsgemäßen Verfahrens besteht eine Störung der Überwachung darin, dass in einem Überwachungsintervall keine Überwachung möglich ist. Beispielsweise wird auf eine Überwachungsnachricht keine Antwortnachricht von dem Diensterbringungsrechner empfangen.

Die folgenden Vorhaben sind für eine intervallmäßige Überwachung besonders geeignet:
- Länge des Zeitfensters ein Tag, minimale Verfügbarkeit der Überwachung im Bereich von 95 Prozent bis 100 Prozent oder von 97 Prozent bis 98 Prozent, Zusatznutzungsdauer zwei Stunden,
- Länge des Zeitfensters eine Woche, minimale Verfügbarkeit der Überwachung im Bereich von 95 Prozent bis 100 Prozent oder von 97 Prozent bis 98 Prozent, Zusatznutzungsdauer ein Tag, und
- Länge des Zeitfensters zwei Wochen, minimale Verfügbarkeit der Überwachung im Bereich von 95 Prozent bis 100 Prozent oder von 97 Prozent bis 98 Prozent, Zusatznutzungsdauer zwei Tage.

Bei einer nächsten Weiterbildung werden mindestens zwei Zeitfenster, vorzugsweise jedoch drei Zeitfenster mit zugehörigen Zusatznutzungsdauern und Verfügbarkeitskriterien festgelegt. Die Verfügbarkeitskriterien werden jeweils für alle Zeitfenster geprüft. Bei mehreren erfüllten Verfügbarkeitskriterien wird dem Nutzer die längste zusatznutzungsdauer zur Verfügung gestellt, für die das zugehörige Verfügbarkeitskriterium erfüllt ist. Auch durch diese Maßnahme ist eine einfache empirische Vorgabe von Zusatznutzungsdauern möglich.

Bei einer nächsten Weiterbildung überwacht der Diensterbringungsrechner die Nutzung der Funktion oder einer anderen Funktion auf mindestens einem weiteren Dienstnutzungsrechner.

Die Überwachungsverfahren werden insbesondere durch die Ausführung der gleichen Verfahrensschritte durchgeführt, so dass sich ein Überwachungsprogramm auf dem Diensterbringungsrechner mehrfach für die Überwachung mehrerer Dienstnutzungsrechner einsetzen lässt. Auf den Dienstnutzungsrechnern werden die gleichen Überwachungsprogramme eingesetzt, so dass der Aufwand für das Erstellen und die Pflege der Software gering ist.

Bei einer anderen Weiterbildung legen die Nutzungsbedingungen die Nutzung mehrerer voneinander verschiedener Funktionen fest. Die Zusatznutzungsdauer betrifft die Nutzung der verschiedenen Funktionen. Es wird also bei dem Festlegen der Zusatznutzungsdauer nicht nach der Art der zu nutzenden Funktion unterschieden. Durch diese Vorgehensweise bleibt der Aufwand für das Überwachungsverfahren vertretbar.

Bei einer anderen Weiterbildung werden von dem Dienstnutzungsrechner zyklisch die folgenden Schritte ohne Beschränkung durch die Reihenfolge der Auflistung ausgeführt:
- Senden einer Überwachungsnachricht an den Diensterbringungsrechner,
- beim Ausbleiben einer Antwortnachricht auf die Überwachungsnachricht oder beim Empfang einer fehlerhaften Antwortnachricht Verringern der Zusatznutzungsdauer um einen vorgegebenen Betrag,
- Prüfen der verbliebenen Zusatznutzungsdauer, und
- bei Ablauf der Zusatznutzungsdauer Sperren der Nutzung der Funktion durch den Dienstnutzungsrechner.

Auf diese Art und Weise kann die Einhaltung der Zusatznutzungsdauer auf einfache Art überwacht werden.

Bei einer anderen Weiterbildung führt der Diensterbringungsrechner zyklisch die folgenden Schritte ohne Beschränkung durch die Reihenfolge der Auflistung aus:
- Lesen eines Zusatznutzungsdauerdatums für einen Dienstnutzungsrechner, wobei der Wert des Zusatznutzungsdatums die Zusatznutzungszeitdauer angibt,
- Lesen eines Überwachungsdatums, das den Zeitpunkt der letzten im Rahmen der Überwachung vom Dienstnutzungsrechner empfangenen Nachricht angibt,
- Prüfen einer Überschreitung der Zusatznutzungsdauer abhängig vom Wert des Überwachungsdatums, und
- bei einer Überschreitung der Zusatznutzungsdauer Aktualisieren von Lizenzdaten zur Freigabe von Lizenzen, die dem Dienstnutzungsrechner zugeteilt gewesen sind.

Durch die Durchführung dieser Verfahrensschritte kommt es zu einem Abgleich der Zusatznutzungsdauer auf der Seite des Dienstnutzungsrechners und auf der Seite des Diensterbringungsrechners. Nach der Freigabe von Lizenzen können diese wieder von anderen Dienstnutzungsrechnern genutzt werden.

Die Erfindung betrifft außerdem einen Vorrichtungsverbund zum Durchführen des erfindungsgemäßen Verfahrens oder einer seiner Weiterbildungen. Damit gelten die oben genannten technischen Wirkungen auch für den Vorrichtungsverbund.

Im Folgenden wird die Erfindung an Hand der beiliegenden Zeichnungen erläutert. Darin zeigen:
- Figur 1: ein Datenübertragungsnetz und Verfahrensschritte zum Nutzen von lizenzpflichtigen Funktionen,
- Figur 2: eine Tabelle zum Festlegen von Zusatznutzungsdau- ern,
- Figur 3: einen Zeitstrahl zur Veranschaulichung der Lage von Zeitfenstern, die zum Festlegen der Zusatznutzungs- dauer verwendet werden,
- Figur 4: Verfahrensschritte, die von einem Dienstnutzungs- rechner durchgeführt werden, und
- Figur 5: Verfahrensschritte, die von einem Diensterbrin- gungsrechner durchgeführt werden.

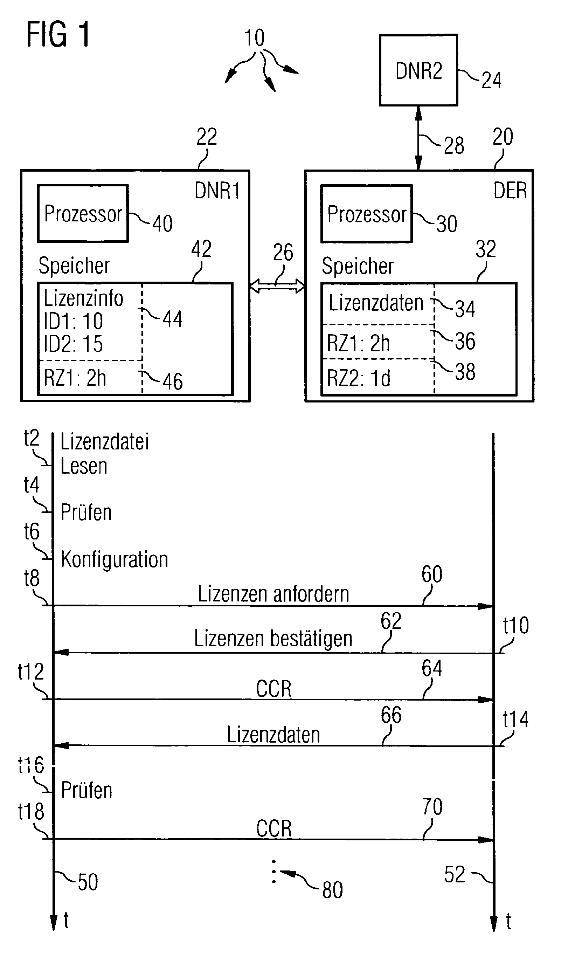

Figur 1 zeigt ein Datenübertragungsnetz 10, in dem eine Vielzahl von Rechnern verbunden bzw. verbindbar sind. Das Datenübertragungsnetz 10 ist beispielsweise ein Datenübertragungsnetz, das gemäß Internetprotokoll arbeitet. Im Ausführungsbeispiel enthält das Datenübertragungsnetz 10 einen Diensterbringungsrechner 20 und zwei Dienstnutzungsrechner 22, 24. Der Diensterbringungsrechner 20 ist beispielsweise ein handelsüblicher Personalcomputer. Der Dienstnutzungsrechner 22 ist beispielsweise ein Netzelement eines Telekommunikationsnetzes für eine kanalbasierte Telekommunikation oder für eine datenpaketorientierte Telekommunikation, z.B. für Sprachtelefonie oder Bildtelefonie. Beispielsweise ist der Dienstnutzungsrechner 22 ein Netzelement vom Typ hiX5300 der Firma Siemens AG. Der Diensterbringungsrechner 20 arbeitet als sogenannter Server und kommuniziert über Datenübertragungsverbindungen 26, 28 mit dem Dienstnutzungsrechner 22, 24, die auch als sogenannte Clients bezeichnet werden.

Der Diensterbringungsrechner 20 enthält einen Prozessor 30, beispielsweise einen Mikroprozessor. Der Prozessor 30 arbeitet Befehle ab, die mit Hilfe von Befehlsdaten in einem Speicher 32 des Diensterbringungsrechners 20 hinterlegt sind. Dabei werden die im Folgenden erläuterten Funktionen ausgeführt. Im Speicher 32 werden beispielsweise auch Lizenzdaten 34 gespeichert. Um einem Missbrauch entgegenzuwirken, werden die Lizenzdaten 34 nur in einem flüchtig speichernden Speicher 32 gespeichert, beispielsweise in einem Speicher mit wahlfreiem Zugriff (RAM - Random Access Memory). Die Lizenzdaten 34 betreffen bspw.:
- die Netzadressen der Diensterbringungsrechner 22, 24, und
- leistungsbezogene Merkmale für Leistungsmerkmale mit Kennzeichen ID1, ID2 usw. verbunden mit jeweils einer Anzahl, die die gleichzeitige Nutzung dieser Leistungsmerkmale im Datenübertragungsnetz 10 angibt.

Die Lizenzdaten 34 stammen aus einer Lizenzdatei , die auf einem nicht dargestellten ftp-Server (File Transfer Protocol) gespeichert ist und unter anderem die folgenden Daten enthält:
- Dateikennzeichen,
- Kundenname,
- Produktname,
- Signaturinformation,
- Erstellungsdatum der Lizenzdatei,
- die Netzadressen der Dienstnutzungsrechner 22, 24,
- die Netzadresse des Diensterbringungsrechner 20,
- ein optionales Ablaufdatum,
- und leistungsmerkmalbezogene Daten für ein Leistungsmerkmal mit dem Kennzeichen ID1 und für ein davon verschiedenes Leistungsmerkmal mit dem Kennzeichen ID2, insbesondere die Anzahl der gleichzeitig möglichen Nutzungen der Leistungsmerkmale mit den Kennzeichen ID1 und ID2,
- und eine digitale Unterschrift bzw. Signatur.

Im Ausführungsbeispiel kann das Leistungsmerkmal mit dem Kennzeichen ID1 bspw. 50 mal in dem Datenübertragungsnetz 10 genutzt werden. Das Leistungsmerkmal mit dem Kennzeichen ID2 kann 80 mal in dem Datenübertragungsnetz 10 genutzt werden.

In der Speichereinheit 32 werden außerdem vermerkt:
- für jeden Dienstnutzungsrechner 22, 24 ein LCC-Datum (last cyclic check), in dem die Zeit der letzten empfangenen CCR-Nachricht gespeichert ist,
- für jeden Dienstnutzungsrechner 22, 24 eine Zusatznutzungsdauer RZ1, RZ2 in einem Datum 36 bzw. 38, und
- für jeden Dienstnutzungsrechner 22, 24 die Anzahl der aktuell genutzten Leistungsmerkmale mit dem Kennzeichen ID1 bzw. ID2.

Im Ausführungsbeispiel beträgt die Zusatznutzungsdauer RZ1 für den Dienstnutzungsrechner 22 zwei Stunden (2 h). Die Zusatznutzungszeit RZ2 für den Dienstnutzungsrechner 24 beträgt dagegen einen Tag (1 d).

Der Dienstnutzungsrechner 22 enthält im Ausführungsbeispiel ebenfalls einen Prozessor 40, beispielsweise einen Mikroprozessor. Weiterhin enthält der Dienstnutzungsrechner 22 einen Speicher 42, beispielsweise einen RAM-Speicher. Im Speicher 42 sind Befehlsdaten gespeichert, bei deren Bearbeitung durch den Prozessor 40 die im Folgenden erläuterten Verfahrensschritte mit Bezug zum Dienstnutzungsrechner 22 ausgeführt werden. Im Speicher 42 sind außerdem Lizenzdaten 44 gespeichert, beispielsweise die Anzahl der dem Dienstnutzungsrechner 22 erlaubten gleichzeitigen Zugriffe auf das Leistungsmerkmal mit dem Kennzeichen ID1. Im Ausführungsbeispiel beträgt diese Anzahl gleich zehn. Die Anzahl der gleichzeitigen Nutzungen des Leistungsmerkmals mit dem Kennzeichen ID2 ist im Speicher 42 mit einem Datum gespeichert, das den Wert fünfzehn angibt.

Außerdem ist im Speicher 42 ein Zusatznutzungsdauerdatum 46 gespeichert, in dem die aktuelle Zusatznutzungsdauer RZ1 des Dienstnutzungsrechners 22 vermerkt ist. Im Ausführungsbeispiel beträgt die Zusatznutzungsdauer RZ1 für den Dienstnutzungsrechner 22 zwei Stunden.

Bei einem anderen Ausführungsbeispiel werden die Funktionen des Diensterbringungsrechners 20, des Dienstnutzungsrechners 22 bzw. des Dienstnutzungsrechners 24 durch eine Schaltungseinheit erbracht, die keinen Prozessor enthält.

Im unteren Teil der Figur 1 sind zwei vertikale Zeitstrahlen 50 und 52 dargestellt. Der Zeitstrahl 50 bezieht sich auf Ereignisse, die den Dienstnutzungsrechner 22 betreffen. Dagegen bezieht sich der Zeitstrahl 52 auf Ereignisse, die den Diensterbringungsrechner 20 betreffen. Gleiche Zeitpunkte sind auf gleichen Höhen der Zeitstrahlen 50 und 52 abgetragen. Später liegende Zeitpunkte liegen auf den Zeitstrahlen 50, 52 tiefer als früher liegende Zeitpunkte.

Zu einem Zeitpunkt t2 liest der Dienstnutzungsrechner 22 die Lizenzdaten von dem Lizenzdatei-Server, der in Figur 1 nicht dargestellt ist. Zu einem folgenden Zeitpunkt t4 prüft der Dienstnutzungsrechner 22 die in der Lizenzdatei enthaltene digitale Signatur, beispielsweise unter Verwendung eines sogenannten privaten Schlüssels und unter Berechnung eines sogenannten Hash-Wertes. Es wird im Ausführungsbeispiel davon ausgegangen, dass die digitale Signatur gültig ist.

Zu einem Zeitpunkt t6 wird aufgrund der gültigen Signatur die Konfiguration durchgeführt, die zur Nutzung der Leistungsmerkmale mit dem Kennzeichen ID1 und ID2 erforderlich ist. Zu einem Zeitpunkt t8 fordert der Dienstnutzungsrechner 22 vom Diensterbringungsrechner zehn Lizenzen zur Nutzung des Leistungsmerkmals mit dem Kennzeichen ID1 und fünfzehn Lizenzen zur Nutzung des Leistungsmerkmals mit dem Kennzeichen ID2 an, siehe Lizenzanforderungsnachricht 60. Aufgrund des Empfangs der Lizenzanforderungsnachricht 60 im Diensterbringungsrechner 20 prüft der Diensterbringungsrechner 20, ob noch zehn Lizenzen für das erste Leistungsmerkmal und fünfzehn Lizenzen für das zweite Leistungsmerkmal verfügbar sind. Dabei werden die Lizenzdatei und die im Speicher 32 gespeicherten Lizenzdaten 34 einbezogen. Im Ausführungsbeispiel sind die Lizenzen noch verfügbar. Deshalb bestätigt der Diensterbringungsrechner 20 zu einem Zeitpunkt t10 die Lizenzanforderungsnachricht 60 mit einer Bestätigungsnachricht 62.

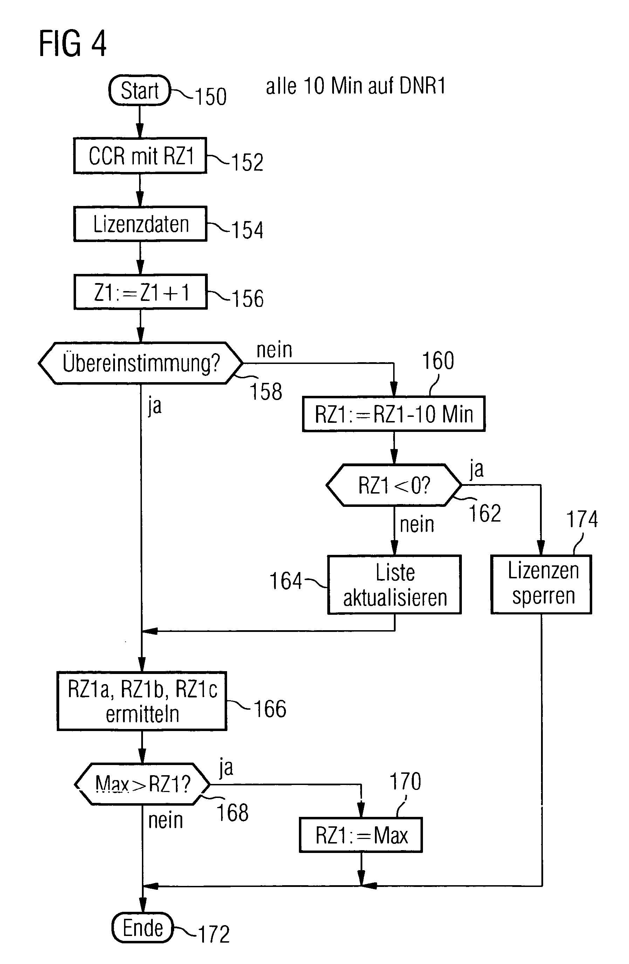

Aufgrund des Empfangs der Bestätigungsnachricht 62 gibt der Dienstnutzungsrechner 22 die Nutzung der beiden Leistungsmerkmale in dem angeforderten umfang frei. Ein Zeitgeberbaustein zum Festlegen eines Überwachungszyklus wird gestartet. Im Ausführungsbeispiel beträgt das Überwachungsintervall zehn Minuten. Zu einem Zeitpunkt t12 läuft das erste Überwachungsintervall ab. Im Dienstnutzungsrechner 22 werden die unten an Hand der Figur 4 näher erläuterten Verfahrensschritte durchgeführt. Dabei wird auch eine Überwachungsnachricht 64 erzeugt und an den Diensterbringungsrechner 20 gesendet. Die Überwachungsnachricht 64 enthält neben der Netzwerkadresse des Dienstnutzungsrechners 22 unter anderem die aktuelle Zusatznutzungsdauer RZ1. Die Überwachungsnachricht 64 wird auch als CCR-Nachricht (cyclic check request) bezeichnet.

Nach dem Empfang der Überwachungsnachricht 64 gleicht der Diensterbringungsrechner 20 die Zusatznutzungsdauer RZ1 ab, d.h. er übernimmt die in der Überwachungsnachricht 64 angegebene Zeit als Wert für das Zusatznutzungsdauerdatum 36. Danach sendet der Diensterbringungsrechner 20 zu einem Zeitpunkt t14 eine Antwortnachricht 66, in der die aktuellen Lizenzdaten des Dienstnutzungsrechners 22 vermerkt sind.

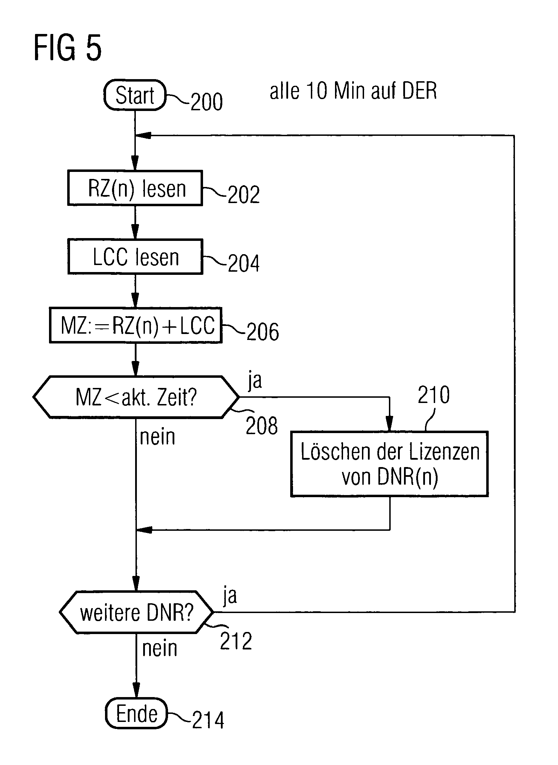

Nach dem Empfang der Antwortnachricht 66 führt der Dienstnutzungsrechner 22 zu einem Zeitpunkt t16 Prüfschritte durch, die ebenfalls unten an Hand der Figur 4 näher erläutert werden. Anschließend wird der Ablauf des nächsten Überwachungsintervalls abgewartet, woraufhin zu einem Zeitpunkt t18 vom Dienstnutzungsrechner 22 erneut eine Überwachungsnachricht 70 gesendet wird. Durch drei Punkte sind weitere Überwachungsschritte 80 angedeutet. Das Überwachungsverfahren wird beendet, wenn der Dienstnutzungsrechner 22 seine Lizenzen an den Diensterbringungsrechner 20 zurück gibt oder im Fall einer Störung, wobei die unten an Hand der Figuren 4 und 5 erläuterten Verfahrensschritte ausgeführt werden.

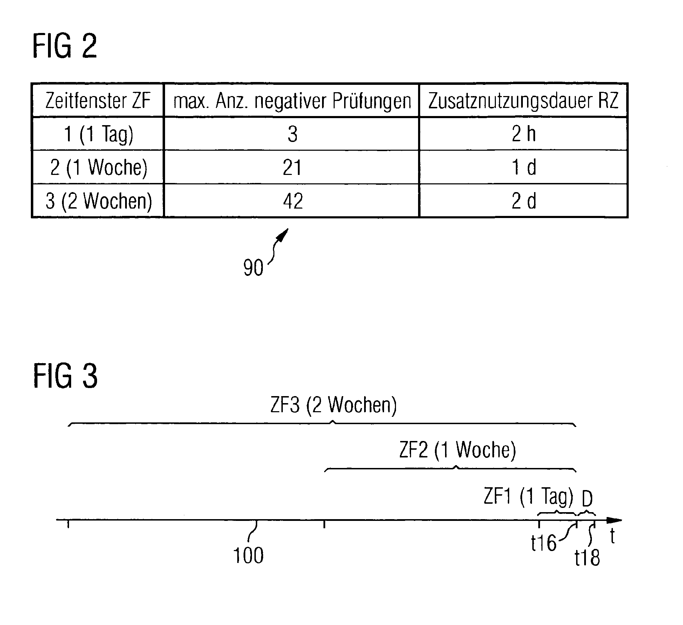

Figur 2 zeigt eine Tabelle 90, die zum Festlegen von Zusatznutzungsdauern RZ verwendet wird. In der ersten Spalte der Tabelle 90 sind die Nummern bzw. die Länge von drei Zeitfenstern eingetragen. In der mittleren Spalte der Tabelle 90 ist für die Zeitfenster jeweils die maximal zulässige Anzahl negativer Überwachungsschritte vermerkt. In der rechten Spalte der Tabelle 90 ist für das jeweilige Zeitfenster eine Zusatznutzungsdauer angegeben, die dem Dienstnutzungsrechner 22 zur Verfügung gestellt wird, falls die maximale Anzahl negativer Überwachungsschritte nicht überschritten wird. Ein Zeitfenster ZF1 hat eine Länge von einem Tag. Die maximale Anzahl negativer Überwachungsschritte innerhalb eines Tages beträgt für das Zeitfenster ZF1 drei. Die bspw. dem ersten Dienstnutzungsrechner 22 gewährte Zusatznutzungsdauer RZ1a für das Zeitfenster ZF1 beträgt dann zwei Stunden. Ein Zeitfenster ZF2 hat eine Dauer von einer Woche. Die maximale Anzahl von erlaubten negativen Überwachungsschritten für das Zeitfenster ZF2 beträgt 21. Wird diese Anzahl nicht überschritten, so wird eine Zusatznutzungsdauer RZ1b von einem Tag gewährt. Ein Zeitfenster ZF3 hat eine Länge von zwei Wochen. Die für das Zeitfenster ZF3 festgelegte maximale Anzahl negativer Überwachungsschritte beträgt 42. Wird die für das Zeitfenster ZF3 festgelegte Anzahl nicht überschritten, so beträgt die gewährte Zusatznutzungsdauer RZ1c zwei Tage.

Figur 3 zeigt einen Zeitstrahl 100 zur Veranschaulichung der Lage der Zeitfenster ZF1, ZF2 und ZF3 bezogen auf den an Hand der Figur 1 gezeigten Zeitpunkt t16. Das Zeitfenster ZF1 erstreckt sich vom Zeitpunkt t16 um einen Tag in die Vergangenheit. Das Zeitfenster ZF2 erstreckt sich vom Zeitpunkt t16 um eine Woche in die Vergangenheit. Das Zeitfenster ZF3 erstreckt sich dagegen vom Zeitpunkt t16 um zwei Wochen in die Vergangenheit, d.h. das Zeitfenster ZF1 beginnt einen Tag bzw. 24 Stunden vor dem Zeitpunkt t16 und endet am Zeitpunkt t16. Zum folgenden Prüfungszeitpunkt t18 verschiebt sich die Lage der Zeitfenster ZF1, ZF2 und ZF3 jeweils um eine Zeitspanne D nach rechts, die mit der Dauer eines Überwachungsintervalls übereinstimmt, d.h. im Ausführungsbeispiel um zehn Minuten.

Figur 4 zeigt Verfahrensschritte, die auf dem Dienstnutzungsrechner 22 nach Ablauf eines Überwachungsintervalls alle zehn Minuten ausgeführt werden. Das Verfahren beginnt jeweils in einem Verfahrensschritt 150. In einem folgenden Verfahrensschritt 152 wird die Überwachungsnachricht (CCR - Cyclic Check Request) an den Diensterbringungsrechner 20 gesendet, siehe Überwachungsnachrichten 64 und 70 in Figur 1. Die im Verfahrensschritt 152 gesendete Überwachungsnachricht enthält die aktuelle Zusatznutzungsdauer RZ1 für den Dienstnutzungsrechner 22.

In einem Verfahrensschritt 154 wird auf das Eintreffen der Antwortnachricht vom Diensterbringungsrechner 20 gewartet. Beim Eintreffen der Antwortnachricht, siehe Antwortnachricht 66 in Figur 1, bzw. nach Ablauf einer vorgegebenen Wartezeit, von beispielsweise 30 Sekunden, wird in einem Verfahrensschritt 156 ein Zykluszähler Z1 um den Wert 1 erhöht.

Anschließend wird in einem Verfahrensschritt 158 geprüft, ob die Antwortnachricht 154 innerhalb der vorgegebenen Wartezeit empfangen worden ist und ob die Lizenzdaten, die in der Antwortnachricht enthalten sind, mit den aktuellen Lizenzdaten für den Dienstnutzungsrechner 22 übereinstimmen. Ist dies nicht der Fall, so folgt nach dem Verfahrensschritt 158 unmittelbar ein Verfahrensschritt 160. Im Verfahrensschritt 160 wird die Zusatznutzungsdauer RZ1 um zehn Minuten verringert, weil die Überwachung fehlerhaft war. Anschließend wird in einem dem Verfahrensschritt 160 folgenden Verfahrensschritt 162 geprüft, ob die Rückgabezeit RZ1 bereits kleiner als 0 ist. Ist dies nicht der Fall, so folgt dem Verfahrensschritt 162 unmittelbar ein Verfahrensschritt 164, in welchem eine Liste aktualisiert wird, in der die fehlerhaften Überwachungen durch Abspeichern der jeweiligen Zählerstände Z1 vermerkt werden. Beispielsweise enthält die Liste 43 Datenfelder für Einträge. Sind alle Datenfelder belegt, so wird der Wert des Datenfeldes mit dem ältesten Eintrag überschrieben.

Außerdem wird im Verfahrensschritt 164 eine Lizenzanforderungsnachricht, entsprechend der Lizenzanforderungsnachricht 60 gemäß Figur 1, an den Diensterbringungsrechner 20 gesendet, falls zwar Lizenzdaten im Verfahrensschritt 154 empfangen worden sind, diese aber bspw. aufgrund eines Resetvorgangs im Diensterbringungsrechner 20 nicht mit dem im Dienstnutzungsrechner 22 gespeicherten Lizenzdaten übereinstimmen. Der Diensterbringungsrechner 20 aktualisiert beim Eintreffen der Lizenzanforderungsnachricht die Lizenzdaten 34 und sendet ggf. eine Bestätigungsnachricht, entsprechend der Bestätigungsnachricht 62 gemäß Figur 1. Durch diese Vorgehensweise wird auch bei einem Reset im Diensterbringungsrechner das Überwachungsverfahren fortgesetzt.

Nach dem Verfahrensschritt 164 folgt ein Verfahrensschritt 166. Der Verfahrensschritt 166 wird auch unmittelbar nach dem Verfahrensschritt 158 durchgeführt, falls eine Übereinstimmung der Lizenzdaten festgestellt worden ist. Im Verfahrensschritt 166 werden die Rückgabezeiten RZ1a, RZ1b und RZ1c für die Zeitfenster ZF1, ZF2 bzw. ZF3 ermittelt. Dabei wird beispielsweise wie folgt vorgegangen:
- für das Zeitfenster ZF1 wird der Zählerwert des Zählers Z1 um die Anzahl von Überwachungsintervallen verringert, die im Zeitfenster ZF1 liegen, d.h. um 144. Somit ist der Anfang des Zeitfensters ZF1 bestimmt.
- Für das Zeitfenster ZF2 wird von der aktuellen Anzahl im Zähler Z1 die Anzahl von Überwachungsintervallen im Zeitfenster ZF2 subtrahiert, d.h. der Wert 1008, und
- für das Zeitfenster ZF3 wird der Wert im Zähler Z1 um die Anzahl von Überwachungsintervallen im Zeitfenster ZF3 verringert, d.h. um 2016.

Das Ende des jeweiligen Zeitfensters ZF1, ZF2 und ZF3 wird durch den aktuellen Zählerstand im Zähler Z1 angegeben. Um festzustellen, ob die Kriterien für die Vergabe der jeweiligen Zusatznutzungsdauer RZ1a, RZ1b bzw. RZ1c erfüllt wurden, wird die Liste für das jeweilige Zeitfenster ZF1, ZF2 und ZF3 durchsucht. Die Suche wird beispielsweise am Ende der Liste begonnen, d.h. mit dem neuesten Eintrag. Wenn die Anzahl der innerhalb der Grenzen des jeweiligen Zeitfensters ZF1, ZF2 bzw. ZF3 liegenden Einträge größer als die maximale Anzahl der gemäß Tabelle 90 vorgegebenen fehlerhaften Überwachungen ist, wird die Prüfung für das Zeitfenster ZF1, ZF2 bzw. ZF3 abgebrochen, wobei die Zusatznutzungsdauer RZ1a, RZ1b bzw. RZ1c bzw. die Rückgabezeit für dieses Zeitfenster ZF1, ZF2 bzw. ZF3 auf den Wert 0 zu setzen ist. Andernfalls wird abgebrochen, sobald in der liste ein Wert gelesen wird, der außerhalb der Grenzen des Zeitfensters ZF1, ZF2 bzw. ZF3 liegt, wobei die Zusatznutzungsdauer RZ1a, RZ1b bzw. RZ1c für das betreffende Zeitfenster ZF1, ZF2 bzw. ZF3 gemäß Tabelle 90, rechte Spalte, gesetzt wird.

Anschließend wird die höchste so ermittelte Rückgabezeit bzw. Zusatznutzungsdauer RZ1a, RZ1b bzw. RZ1c ermittelt und in einem Verfahrensschritt 168 mit der aktuellen Rückgabezeit RZ1 verglichen. Ist die im Verfahrensschritt 166 ermittelte maximale Rückgabezeit größer als die aktuelle Rückgabezeit RZ1, so folgt dem Verfahrensschritt 168 unmittelbar ein Verfahrensschritt 170. Im Verfahrensschritt 170 wird die im Verfahrensschritt 166 ermittelte maximale Rückgabezeit als Wert der Rückgabezeit bzw. Zusatznutzungsdauer RZ1 gespeichert. Nach dem Verfahrensschritt 170 wird der aktuelle Überwachungszyklus im Verfahrensschritt 172 beendet. Der Verfahrensschritt 172 folgt dem Verfahrensschritt 168 unmittelbar, wenn im Verfahrensschritt 168 festgestellt wird, dass der im Verfahrensschritt 166 ermittelte maximale Wert nicht größer als die aktuelle Zusatznutzungsdauer RZ1 ist.

Wird im Verfahrensschritt 162 festgestellt, dass die Zusatznutzungsdauer RZ1 kleiner 0 ist, d.h. der eingeräumte Bonus ist aufgebraucht, so folgt dem Verfahrensschritt 162 unmittelbar ein Verfahrensschritt 174, in dem die Nutzung der lizenzpflichtigen Leistungsmerkmale mit dem Kennzeichen ID1 und ID2 auf dem Dienstnutzungsrechner 22 gesperrt wird. Nach dem Verfahrensschritt 174 folgt der Verfahrensschritt 172. Gemeinsam mit dem Sperren der Lizenzen wird beispielsweise auch der Zähler zum Ermitteln des Überwachungsintervalls gestoppt. Die an Hand der Figur 4 erläuterten Verfahrensschritte werden auf gleiche Weise auch auf dem Dienstnutzungsrechner 24 durchgeführt bzw. auf weiteren Dienstnutzungsrechnern.

Figur 5 zeigt Verfahrensschritte, die von dem Diensterbringungsrechner 20 durchgeführt werden. Die in Figur 5 gezeigten Verfahrensschritte werden vom Diensterbringungsrechner 20 zyklisch jeweils einmal in jedem Überwachungsintervall ausgeführt. Im Ausführungsbeispiel beträgt ein Überwachungsintervall zehn Minuten. Das Verfahren beginnt jeweils in einem Verfahrensschritt 200. In einem dem Verfahrensschritt 200 folgenden Verfahrensschritt 202 wird die Zusatznutzungsdauer RZ1 des ersten Dienstnutzungsrechners 22 aus dem Speicher 32 gelesen. Außerdem wird aus dem Speicher 32 die Zeit des Empfangs der letzten CCR-Nachricht vom Dienstnutzungsrechner 22 gelesen. Diese Zeit wird als LCC (Last Cyclic Check) bezeichnet.

In einem Verfahrensschritt 206 wird eine Maximalzeit MZ durch Addition der Zusatznutzungsdauer RZ1 und der Zeit LCC ermittelt. In einem Verfahrensschritt 208 wird geprüft, ob die Maximalzeit MZ kleiner als die aktuelle Zeit ist. Ist dies der Fall, so folgt dem Verfahrensschritt 208 unmittelbar ein Verfahrensschritt 210, in dem die Lizenzen, die an den Dienstnutzungsrechner 22 vergeben worden sind, wieder freigegeben werden. Dabei werden Lizenzdaten im Speicher 32 verändert. Nach dem Verfahrensschritt 210 folgt unmittelbar ein Verfahrensschritt 212.

Der Verfahrensschritt 212 folgt auch unmittelbar nach dem Verfahrensschritt 208, wenn im Verfahrensschritt 208 festgestellt wird, dass die Maximalzeit größer als die aktuelle Zeit ist, d.h. die Zusatznutzungsdauer RZ1 ist noch nicht aufgebraucht. Im Verfahrensschritt 212 wird geprüft, ob Lizenzen an weitere Dienstnutzungsrechner vergeben worden sind, beispielsweise an den Dienstnutzungsrechner 24. Ist dies der Fall, so folgt dem Verfahrensschritt 212 unmittelbar der Verfahrensschritt 202. Das Verfahren befindet sich in einer Schleife aus den Verfahrensschritten 202 bis 212. Beim Ausführen dieser Schleife werden die eben für den Dienstnutzungsrechner 22 erläuterten Verfahrensschritte für die anderen Dienstnutzungsrechner auf gleiche Art und Weise durchgeführt. Die Schleife aus den Verfahrensschritten 202 bis 212 wird im Verfahrensschritt 212 erst dann verlassen, wenn die Prüfung für alle Dienstnutzungsrechner 22, 24 durchgeführt worden ist, an die Lizenzen vergeben worden sind. Wurde die Prüfung für alle Dienstnutzungsrechner durchgeführt, so folgt dem Verfahrensschritt 212 unmittelbar ein Verfahrensschritt 214, in dem der aktuelle Überwachungszyklus beendet wird.

Die an Hand der Figuren 4 und 5 erläuterten Verfahren laufen asynchron zueinander ab, so dass die Netzlast durch die Überwachungsverfahren verteilt wird.

Zusammenfassend gilt, dass durch das erläuterte Floating-License-System eine hohe Verfügbarkeit der Nutzung von Leistungsmerkmalen gegeben ist, die insbesondere in Telekommunikationssystemen gefordert wird. Außerdem ist die Zuverlässigkeit der Nutzung und des Verfahrens hoch. Die Zuverlässigkeit des Floating-License-Systems ist eine wichtige Voraussetzung für den Betrieb des Systems in Kommunikationsnetzen.

Bei anderen Ausführungsbeispielen wird die Reihenfolge der Verfahrensschritte geändert, insbesondere von Verfahrensschritten, die innerhalb eines unverzweigten Teilabschnittes eines Flussdiagramms gemäß Figur 4 oder Figur 5 liegen.

## Patentansprüche

1. Verfahren zum Betreiben eines Datenübertragungsnetzes (10), bei dem die folgenden Schritte ausgeführt werden:
- Erzeugen von Lizenzdaten (34), die Nutzungsbedingungen für die Nutzung mindestens einer Funktion (ID1) in einem Datenübertragungsnetz (10) festlegen,
- abhängig von den Lizenzdaten (34) Nutzen der Funktion auf mindestens einem Dienstnutzungerechner (22) des Datenübertragungsnetzes (10),
- Überwachen der Einhaltung der Nutzungsbedingungen durch einen Diensterbringungsrechner (20),
- Festlegen mindestens eines Prüfzeitfensters (ZF1 bis ZF3), einer zu dem Prüfzeitfenster (ZF1 bis ZF3) gehörenden Zusatznutzungsdauer (RZ1a, RZ1b, RZ1c) und eines zu dem Prüfzeitfenster (ZF1 bis ZF3) gehörenden Prüfkriteriums, das ein Maß für zugelassene Störungen der Überwachung ist, sowie durch den Dienstnutzungerechner:
- Ermitteln der Störungen, die in dem Prüfzeitfenster (ZF1 bis ZF3) aufgetreten sind (164),
- Prüfen des Prüfkriteriums an Hand der ermittelten Störungen (166 bis 170),
- Festlegen einer Zusatznutzungsdauer (RZ1) abhängig vom Ergebnis der Prüfung des Prüfkriteriums (170),
- Nutzen der Funktion (ID1) abhängig von der Zusatznutzungsdauer (RZ1).

2. Verfahren nach Anspruch 1, **dadurch gekennzeichnet, dass** die Lizenzdaten (34) eine Anzahl der gleichzeitigen Nutzungen mindestens einer Funktion (ID1, ID2) in dem Datenübertragungsnetz (10) festlegen.

3. Verfahren nach Anspruch 1 oder 2, **dadurch gekennzeichnet, dass** die Funktion (ID1, ID2) den Aufruf und die Nutzung eines Programms oder eines Programmteils betrifft,
oder dass die Funktion (ID1, ID2) die Nutzung einer Schaltungseinheit oder einer Teilfunktion einer Schaltungseinheit betrifft.

4. Verfahren nach Anspruch 1, 2 oder 3, **dadurch gekennzeichnet, dass** das Zeitfenster (ZF1 bis ZF3) ein Zeitfenster (ZF1 bis ZF3) mit sich ändernder Anfangszeit ist, wobei die Endzeit durch die aktuelle Zeit festgelegt ist und wobei die Länge des Zeitfensters (ZF1 bis ZF3) konstant ist.

5. Verfahren nach Anspruch 4, **dadurch gekennzeichnet, dass** mindestens eine der folgenden Festlegungen oder eine nur um plus oder minus zehn Prozent je Wert abweichende Festlegung getroffen wird:
Länge des zeitfensters (ZF1) ist gleich ein Tag und
zugehörige Zusatznutzungsdauer (RZ1a) ist gleich zwei Stunden,
Länge des Zeitfensters (ZF2) ist gleich eine Woche und
zugehörige Zusatznutzungsdauer (RZ1b) ist gleich ein Tag,
Länge des Zeitfensters (ZF3) ist gleich zwei Wochen und
zugehörige Zusatznutzungsdauer (RZ1c) ist gleich zwei Tage.

6. Verfahren nach einem der vorhergehenden Ansprüche, **dadurch gekennzeichnet, dass** die Überwachung wiederholt automatisch gestartet wird, vorzugsweise gemäß einem vorgegebenen Überwachungsintervall.

7. Verfahrens nach Anspruch 6, **dadurch gekennzeichnet, dass** eine Störung der Überwachung darin besteht, dass in einem Überwachungsintervall keine Überwachung möglich ist, wobei die Länge des Überwachungsintervalls vorzugsweise im Bereich von fünf Minuten bis einer Stunde liegt, insbesondere bei zehn Minuten,
oder dass eine Störung der Überwachung darin besteht, dass fehlerhafte Daten empfangen werden.

8. Verfahren nach Anspruch 4 und 7, **dadurch gekennzeichnet, dass** mindestens eine der folgenden Festlegungen getroffen wird,
Länge des Zeitfensters (ZF1) gleich ein Tag, minimale Verfügbarkeit der Überwachung im Bereich von 95 Prozent bis 100 Prozent und zusatznutzungsdauer (RZ1a) gleich zwei Stunden,
Länge des Zeitfensters (ZF2) gleich eine Woche, minimale Verfügbarkeit der Überwachung im Bereich von 95 Prozent bis 100 Prozent und (RZ1b) Zusatznutzungsdauer gleich ein Tag, Länge des Zeitfensters (ZF3) gleich zwei Wochen, minimale Verfügbarkeit der Überwachung im Bereich von 95 Prozent bis 100 Prozent und Zusatznutzungsdauer (RZ1c) gleich zwei Tage.

9. Verfahren nach einem der Ansprüche 4 bis 8, **dadurch gekennzeichnet, dass** mindestens zwei Zeitfenster (ZF1, ZF2) und zugehörige Zusatznutzungsdauern (RZ1a, RZ1b) und zugehörige verfügbarkeitskriterien festgelegt werden,
dass die Verfügbarkeitskriterien für die mindestens zwei Zeitfenster (ZF1, ZF2) geprüft werden (166),
und dass bei mehreren erfüllten Verfügbarkeitskriterien für Zeitfenster (ZF1, ZF2) die größte für diese Zeitfenster (ZF1, ZF2) festgelegte Zusatznutzungsdauer (RZ1a, RZ1b) ausgewählt und als Zusatznutzungsdauer (RZ1a, RZ1b) verwendet wird (168).

10. Verfahren nach einem der vorhergehenden Ansprüche, **dadurch gekennzeichnet, dass** der Diensterbringungsrechner (20) die Nutzung der Funktion (ID1) mindestens eines weiteren Dienstnutzungsrechners (24) überwacht.

11. Verfahren nach einem der vorhergehenden Ansprüche, **dadurch gekennzeichnet, dass** die Nutzungsbedingungen die Nutzung mehrerer voneinander verschiedener Funktionen (ID1, ID2) festlegen,
und dass die Zusatznutzungsdauer (RZ1) die Nutzung mehrerer Funktionen (ID1, ID2) betrifft.

12. Verfahren nach einem der vorhergehenden Ansprüche, **gekennzeichnet durch** die von einem Dienstnutzungsrechner (22), insbesondere zyklisch, ausgeführten Schritte:
Senden einer Überwachungsnachricht (64, 70; 152) an den Diensterbringungsrechner (20),
beim Ausbleiben einer Antwortnachricht (66) auf die Überwachungsnachricht (64, 70) oder beim Empfang einer fehlerhaften Antwortnachricht (66) Verringern der Zusatznutzungsdauer (RZ1) um einen vorgegebenen Betrag (160),
Prüfen der verbliebenen Zusatznutzungsdauer (162),
bei Ablauf der Zusatznutzungsdauer (RZ1) Sperren der Nutzung der Funktion (ID1) **durch** den Dienstnutzungsrechner (174).

13. verfahren nach einem der vorhergehenden Ansprüche, **gekennzeichnet durch** die vom Diensterbringungsrechner (20), insbesondere zyklisch, ausgeführten Schritte:
Lesen eines Zusatznutzungsdauerdatums (36) für einen Dienstnutzungsrechner (22, 24), wobei der Wert des Zusatznutzungsdauerdatums (36) die Zusatznutzungszeitdauer (RZ1, RZ2) angibt (202),
Lesen eines Überwachungsdatums (LCC), das von der letzten erfolgreichen Überwachung abhängt, insbesondere eines Überwachungsdatums (LCC), das den Zeitpunkt der letzten im Rahmen der Überwachung vom Dienstnutzungsrechner (22) empfangenen Nachricht angibt (204),
Prüfen einer Überschreitung der Zusatznutzungsdauer abhängig vom Wert des Überwachungsdatums (208), und
bei einer Überschreitung der Zusatznutzungsdauer (RZ1) Aktualisieren von Lizenzdaten (34) zur Freigabe von Lizenzen, die dem Dienstnutzungsrechner (22) zugeteilt gewesen sind (210).

14. Vorrichtungsverbund (10)
- mit Mitteln zum Erzeugen von Lizenzdaten (34), die Nutzungsbedingungen für die Nutzung mindestens einer Funktion (ID1) in einem Datenübertragungsnetz (10) festlegen,
- mit Mitteln zum Festlegen mindestens eines Prüfzeitfensters (ZF1 bis ZF3), einer zu dem Prüfzeitfenster (ZF1 bis ZF3) gehörenden Zusatznutzungsdauer (RZ1a, RZ1b, RZ1c) und eines zu dem Prüfzeitfenster (ZF1 bis ZF3) gehörenden Prüfkriteriums, das ein Maß für zugelassene Störungen der Überwachung ist,
- mit einem Diensterbringungsrechner (20), der Mittel umfasst zum Überwachen der Einhaltung der Nutzungsbedingungen, sowie
- mit einem Dienstnutzungsrechner, der Mittel umfasst zum Nutzen der Funktion abhängig von den Lizenzdaten (34), zum Ermitteln von Störungen, die in dem Prüfzeitfenster (ZF1 bis ZF3) aufgetreten sind, zum Prüfen des Prüfkriteriums an Hand der ermittelten Störungen, zum Festlegen einer Zusatznutzungsdauer (RZ1) abhängig vom Ergebnis der Prüfung des Prüfkriteriums und zum Nutzen der Funktion (ID1) abhängig von der Zusatznutzungsdauer (RZ1).

## Claims

1. Method for the operation of a data transmission network (10), in which the following steps are performed:
- licence data (34) stipulating the conditions of use for using at least one function (ID1) in a data transmission network (10) are produced,
- the licence data (34) are taken as a basis for using the function on at least one service use computer (22) in the data transmission network (10),
- compliance with the conditions of use is monitored by a service performance computer (20),
- at least one checking time window (ZF1 to ZF3), a supplementary use period (RZ1a, RZ1b, RZ1c) associated with the checking time window (ZF1 to ZF3) and a checking criterion, which is associated with the checking time window (ZF1 to ZF3) and which is a measure of permitted disturbances in the monitoring, are stipulated, and the service use computer:
- ascertains the disturbances which have occurred (164) in the checking time window (ZF1 to ZF3),
- checks the checking criterion using the ascertained disturbances (166 to 170),
- stipulates a supplementary use period (RZ1) on the basis of the result of the check on the checking criterion (170),
- uses the function (ID1) on the basis of the supplementary use period (RZ1).

2. Method according to Claim 1, **characterized in that** the licence data (34) stipulate a number of simultaneous uses of at least one function (ID1, ID2) in the data transmission network (10).

3. Method according to Claim 1 or 2, **characterized in that** the function (ID1, ID2) relates to the calling and use of a program or a program part,
or **in that** the function (ID1, ID2) relates to the use of a circuit unit or a sub-function of a circuit unit.

4. Method according to Claim 1, 2, or 3, **characterized in that** the time window (ZF1 to ZF3) is a time window (ZF1 to ZF3) with a changing start time, wherein the end time is stipulated by the current time and wherein the length of the time window (ZF1 to ZF3) is constant.

5. Method according to Claim 4, **characterized in that** at least one of the following stipulations or a stipulation which differs only by plus or minus ten per cent per value is made:
length of the time window (ZF1) is equal to one day and associated supplementary use period (RZ1a) is equal to two hours,
length of the time window (ZF2) is equal to one week and associated supplementary use period (RZ1b) is equal to one day,
length of the time window (ZF3) is equal to two weeks and associated supplementary use period (RZ1c) is equal to two days.

6. Method according to one of the preceding claims, **characterized in that** the monitoring is repeatedly started automatically, preferably in line with a prescribed monitoring interval.

7. Method according to Claim 6, **characterized in that** a disturbance in the monitoring involves no monitoring being possible in a monitoring interval, wherein the length of the monitoring interval is preferably in the range from five minutes to one hour, particularly ten minutes,
or **in that** a disturbance in the monitoring involves erroneous data being received.

8. Method according to Claims 4 and 7, **characterized in that** at least one of the following stipulations is made:
length of the time window (ZF1) equal to one day, minimum availability of monitoring in the range from 95 per cent to 100 per cent and supplementary use period (RZ1a) equal to two hours,
length of the time window (ZF2) equal to one week, minimum availability of monitoring in the range from 95 per cent to 100 per cent and supplementary use period (RZ1b) equal to one day,
length of the time window (ZF3) equal to two weeks, minimum availability of monitoring in the range from 95 per cent to 100 per cent and supplementary use period (RZ1c) equal to two days.

9. Method according to one of Claims 4 to 8, **characterized in that** at least two time windows (ZF1, ZF2) and associated supplementary use periods (RZ1a, RZ1b) and associated availability criteria are stipulated,
**in that** the availability criteria for the at least two time windows (ZF1, ZF2) are checked (166),
and **in that**, if a plurality of availability criteria for time windows (ZF1, ZF2) are met, the longest supplementary use period (RZ1a, RZ1b) stipulated for these time windows (ZF1, ZF2) is selected and is used (168) as the supplementary use period (RZ1a, RZ1b).

10. Method according to one of the preceding claims, **characterized in that** the service performance computer (20) monitors the use of the function (ID1) of at least one further service use computer (24).

11. Method according to one of the preceding claims, **characterized in that** the conditions of use stipulate the use of a plurality of functions (ID1, ID2) which are different from one another,
and **in that** the supplementary use period (RZ1) relates to the use of a plurality of functions (ID1, ID2).

12. Method according to one of the preceding claims, **characterized by** the following steps performed, in particular cyclically, by a service use computer (22):
a monitoring message (64, 70; 152) is sent to the service performance computer (20),
the absence of a response message (66) for the monitoring message (64, 70) or the receipt of an erroneous response message (66) prompts the supplementary use period (RZ1) to be reduced by a prescribed amount (160),
the remaining supplementary use period (162) is checked,
expiry of the supplementary use period (RZ1) prompts use of the function (ID1) to be blocked by the service use computer (174).

13. Method according to one of the preceding claims, **characterized by** the following steps performed, in particular cyclically, by the service performance computer (20):
a supplementary use period data item (36) is read for a service use computer (22, 24), wherein the value of the supplementary use period data item (36) indicates (202) the supplementary use period (RZ1, RZ2),
a monitoring data item (LCC), which is dependent on the last successful monitoring, in particular a monitoring data item (LCC), which indicates (204) the time of the last message received from the service use computer (22) in the course of monitoring, is read,
a transgression of the supplementary use period is checked on the basis of the value of the monitoring data item (208), and
a transgression of the supplementary use period (RZ1) prompts licence data (34) for enabling licences which have been allocated (210) to the service use computer (22) to be updated.

14. Apparatus cluster (10)
- having means for producing licence data (34) which stipulate conditions of use for the use of at least one function (ID1) in a data transmission network (10),
- having means for stipulating at least one checking time window (ZF1 to ZF3), a supplementary use period (RZ1a, RZ1b, RZ1c) associated with the checking time window (ZF1 to ZF3) and a checking criterion, which is associated with the checking time window (ZF1 to ZF3) and which is a measure of permitted disturbances in the monitoring,
- having a service performance computer (20) which comprises means for monitoring compliance with the conditions of use, and
- having a service use computer which comprises means for using the function on the basis of the licence data (34), for ascertaining disturbances which have occurred in the checking time window (ZF1 to ZF3), for checking the checking criterion using the ascertained disturbances, for stipulating a supplementary use period (RZ1) on the basis of the result of the check on the checking criterion and for using the function (ID1) on the basis of the supplementary use period (RZ1).

## Revendications

1. Procédé pour faire fonctionner un réseau de transmission de données (10), dans lequel les étapes suivantes sont exécutées :
- production de données de licence (34) qui définissent les conditions d'utilisation pour l'utilisation d'au moins une fonction (ID1) dans un réseau de transmission de données (10),
- en fonction des données de licence (34), utilisation de la fonction sur au moins un ordinateur d'utilisation de services (22) du réseau de transmission de données (10),
- surveillance du respect des conditions d'utilisation par un ordinateur de prestation de services (20),
- définition d'au moins une fenêtre temporelle de vérification (ZF1 à ZF3), d'une durée d'utilisation supplémentaire (RZ1a, RZ1b, RZ1c) appartenant à la fenêtre temporelle de vérification (ZF1 à ZF3) et d'un critère de vérification appartenant à la fenêtre temporelle de vérification (ZF1 à ZF3) qui est une mesure des perturbations admises lors de la surveillance, ainsi que,
exécutées par l'ordinateur d'utilisation de services :
- détermination des perturbations qui sont survenues dans la fenêtre temporelle de vérification (ZF1 à ZF3) (164),
- vérification du critère de vérification sur la base des perturbations détectées (166 à 170),
- définition d'une durée d'utilisation supplémentaire (RZ1) en fonction du résultat de la vérification du critère de vérification (170),
- utilisation de la fonction (ID1) en fonction de la durée d'utilisation supplémentaire (RZ1).

2. Procédé selon la revendication 1, **caractérisé en ce que** les données de licence (34) définissent un nombre des utilisations simultanées d'au moins une fonction (ID1, ID2) dans le réseau de transmission de données (10).

3. Procédé selon la revendication 1 ou 2, **caractérisé en ce que** la fonction (ID1, ID2) concerne l'appel et l'utilisation d'un programme ou d'une partie de programme ou **en ce que** la fonction (ID1, ID2) concerne l'utilisation d'une unité de commutation ou d'une fonction partielle d'une unité de commutation.

4. Procédé selon la revendication 1, 2 ou 3, **caractérisé en ce que** la fenêtre temporelle (ZF1 à ZF3) est une fenêtre temporelle (ZF1 à ZF3) dont l'heure de début est variable, l'heure de fin étant fixée par l'heure actuelle et la longueur de la fenêtre temporelle (ZF1 à ZF3) étant constante.

5. Procédé selon la revendication 4, **caractérisé en ce qu'**au moins une des définitions suivantes ou une définition s'écartant seulement de plus ou moins dix pour cent pour chaque valeur est établie :
la longueur de la fenêtre temporelle (ZF1) est égale à un jour et la durée d'utilisation supplémentaire associée (RZ1a) est égale à deux heures,
la longueur de la fenêtre temporelle (ZF2) est égale à une semaine et la durée d'utilisation supplémentaire associée (RZ1b) est égale à un jour,
la longueur de la fenêtre temporelle (ZF3) est égale à deux semaines et la durée d'utilisation supplémentaire associée (RZ1c) est égale à deux jours.

6. Procédé selon l'une des revendications précédentes, **caractérisé en ce que** la surveillance est démarrée automatiquement de façon répétée, de préférence selon un intervalle de surveillance prédéfini.

7. Procédé selon la revendication 6, **caractérisé en ce qu'**une perturbation lors de la surveillance consiste en une impossibilité de surveiller dans un intervalle de surveillance, la longueur de l'intervalle de surveillance étant de préférence une plage allant de cinq minutes à une heure, notamment une plage de dix minutes,
ou **en ce qu'**une perturbation lors de la surveillance consiste en la réception de données erronées.

8. Procédé selon les revendications 4 et 7, **caractérisé en ce qu'**au moins une des définitions suivantes est établie :
la longueur de la fenêtre temporelle (ZF1) est égale à un jour, la disponibilité minimale de la surveillance est d'un ordre compris entre 95 pourcent et 100 pourcent et
la durée d'utilisation supplémentaire (RZ1a) est égale à deux heures,
la longueur de la fenêtre temporelle (ZF2) est égale à une semaine, la disponibilité minimale de la surveillance est d'un ordre compris entre 95 pourcent et 100 pourcent et la durée d'utilisation supplémentaire (RZ1b) est égale à un jour,
la longueur de la fenêtre temporelle (ZF3) est égale à deux semaines, la disponibilité minimale de la surveillance est d'un ordre compris entre 95 pourcent et 100 pourcent et la durée d'utilisation supplémentaire (RZ1c) est égale à deux jours.

9. Procédé selon l'une des revendications 4 à 8,
**caractérisé en ce qu'**au moins deux fenêtres temporelles (ZF1, ZF2) et des durées d'utilisation supplémentaire associées (RZ1a, RZ1b) et des critères de disponibilité associés sont fixés,
**en ce que** les critères de disponibilité sont vérifiés pour les au moins deux fenêtres temporelles (ZF1, ZF2) (166)
et **en ce que**, lorsque plusieurs critères de disponibilité sont remplis pour les fenêtres temporelles (ZF1, ZF2), la plus grande durée d'utilisation supplémentaire (RZ1a, RZ1b) définie pour ces fenêtres temporelles (ZF1, ZF2) est choisie et utilisée en tant que durée d'utilisation supplémentaire (RZ1a, RZ1b) (168).

10. Procédé selon l'une des revendications précédentes, **caractérisé en ce que** l'ordinateur de prestation de services (20) surveille l'utilisation de la fonction (ID1) d'au moins un autre ordinateur d'utilisation de services (24).

11. Procédé selon l'une des revendications précédentes, **caractérisé en ce que** les conditions d'utilisation définissent l'utilisation de plusieurs fonctions (ID1, ID2) différentes les unes des autres
et **en ce que** la durée d'utilisation supplémentaire (RZ1) concerne l'utilisation de plusieurs fonctions (ID1, ID2).

12. Procédé selon l'une des revendications précédentes, **caractérisé par** les étapes exécutées, notamment de manière cyclique, par un ordinateur d'utilisation de services (22) :
envoi d'un message de surveillance (64, 70 ; 152) à l'ordinateur de prestation de services (20),
en cas d'absence de message de réponse (66) au message de surveillance (64, 70) ou de réception d'un message de réponse erroné (66), réduction de la durée d'utilisation supplémentaire (RZ1) d'une grandeur prédéfinie (160),
surveillance de la durée d'utilisation supplémentaire résiduelle (162),
à l'expiration de la durée d'utilisation supplémentaire (RZ1), blocage de l'utilisation de la fonction (ID1) par l'ordinateur d'utilisation de services (174).

13. Procédé selon l'une des revendications précédentes, **caractérisé par** les étapes exécutées, notamment de manière cyclique, par l'ordinateur de prestation de services (20) :
lecture d'une donnée de durée d'utilisation supplémentaire (36) pour un ordinateur d'utilisation de services (22, 24), la valeur de la donnée de durée d'utilisation supplémentaire (36) indiquant la durée d'utilisation supplémentaire (RZ1, RZ2) (202),
lecture d'une donnée de surveillance (LCC) qui dépend de la dernière surveillance réussie, notamment d'une donnée de surveillance (LCC) qui indique l'heure du dernier message reçu par l'ordinateur d'utilisation de services (22) dans le cadre de la surveillance (204),
surveillance d'un dépassement de la durée d'utilisation supplémentaire en fonction de la valeur de la donnée de surveillance (208) et
en cas de dépassement de la durée d'utilisation supplémentaire (RZ1), actualisation de données de licence (34) pour la délivrance de licences qui ont été attribuées à l'ordinateur d'utilisation de services (22) (210).

14. Réseau de dispositifs (10)
- comprenant des moyens pour produire des données de licence (34) qui définissent des conditions d'utilisation pour l'utilisation d'au moins une fonction (ID1) dans un réseau de transmission de données (10),
- comprenant des moyens pour définir au moins une fenêtre temporelle de vérification (ZF1 à ZF3), une durée d'utilisation supplémentaire (RZ1a, RZ1b, RZ1c) appartenant à la fenêtre temporelle de vérification (ZF1 à ZF3) et un critère de vérification appartenant à la fenêtre temporelle de vérification (ZF1 à ZF3) qui est une mesure des perturbations admises lors de la surveillance,
- comprenant un ordinateur de prestation de services (20) qui comprend des moyens de surveillance du respect des conditions d'utilisation et
- comprenant un ordinateur d'utilisation de services qui comprend des moyens pour utiliser la fonction en fonction des données de licence (34), pour déterminer des perturbations qui sont survenues dans la fenêtre temporelle de vérification (ZF1 à ZF3), pour vérifier le critère de vérification sur la base des perturbations détectées, pour définir une durée d'utilisation supplémentaire (RZ1) en fonction du résultat de la vérification du critère de vérification et pour utiliser la fonction (ID1) en fonction de la durée d'utilisation supplémentaire (RZ1).
